# EUROPÄISCHE PATENTSCHRIFT

(11) **EP 3 033 537 B1**
(45) Veröffentlichungstag und Bekanntmachung des Hinweises auf die Patenterteilung: **29.05.2019**
(21) Anmeldenummer: 14753008.3
(22) Anmeldetag: 24.07.2014
(51) Int. Cl.: F16D 25/12, F16D 48/02

(54) **VENTILANORDNUNG FÜR EIN KUPPLUNGSSYSTEM**
VALVE ASSEMBLY FOR A CLUTCH SYSTEM
ENSEMBLE SOUPAPE POUR SYSTÈME D'EMBRAYAGE

(30) Priorität: 16.08.2013 DE 102013216315
(43) Veröffentlichungstag der Anmeldung: 22.06.2016
(73) Patentinhaber: Schaeffler Technologies AG & Co. KG, 91074 Herzogenaurach (DE)
(72) Erfinder: RAMMHOFER, Thomas, 77880 Sasbach (DE); GRABENSTÄTTER, Jan, 76593 Gernsbach (DE)
(86) Internationale Anmeldenummer: PCT/DE2014/200348
(87) Internationale Veröffentlichungsnummer: WO 2015/021973

(56) Entgegenhaltungen:
- EP-A2- 1 793 138
- WO-A1-2012/000479
- DE-A1- 10 106 958
- DE-A1-102012 207 402
- US-A- 2 353 161

## Beschreibung

Die vorliegende Erfindung betrifft hydraulisch betätigbare Kupplungssysteme und dabei insbesondere Einrücksysteme oder Ausrücksysteme von Kupplungen. Die vorliegende Erfindung betrifft insbesondere eine Ventilanordnung für ein hydraulisch betätigbares Kupplungssystem, wie beispielsweise mit einer Doppelkupplung, gemäß den Merkmalen des Anspruchs 1.

Ein hydraulisches System, umfassend einen Geberzylinder, einen Nehmerzylinder sowie eine diese verbindende Druckmediumsleitung wird beispielsweise in einem Kupplungssystem zur Betätigung einer Fahrzeugkupplung im Antriebsstrang von Kraftfahrzeugen verwendet. Die Fahrzeugkupplung dient der wahlweisen Unterbrechung der Drehmomentübertragung zwischen einem Verbrennungsmotor und einem Schaltgetriebe.

Aus der Druckschrift WO 2012/000479 A1 ist ein hydraulisches Element mit einem Ventilkörper in einer Hydraulikleitung zwischen einem Geber- und einem Nehmerzylinder bekannt. Der Ventilkörper weist ein Dichtelement auf, welches bei einem nehmerzylinderseitigen Überdruck schließt und somit als Rückschlagventil fungiert.

In der Druckmediumsleitung werden oftmals Ventilanordnungen verwendet, um Unterdrücke am Nehmerzylinder zu vermeiden. Beispielsweise kann eine derartige Ventilanordnung an einem Geberzylinder ein Nachsaugventil aufweisen.

Nachteilig an den aus dem Stand der Technik bekannten Lösungen für das Verbinden von Hydraulikkomponenten in Kupplungssystemen ist es, dass Nachsaugventile unter Umständen die Eigenschaft aufweisen können, dass diese beim Durchströmen der Hydraulikflüssigkeit Schmutzpartikel filtrieren können, welche im Anschluss zu einer Fehlfunktion des Ventils führen können. Beispielsweise kann dies dazu führen, dass das Ventil nicht mehr sicher und vollständig schließt und der Geberzylinder so eine undefinierte interne Leckage aufweisen kann. Ferner weisen derartige Ventilanordnungen oftmals eine störende Geräuschentwicklung auf.

Es ist daher Aufgabe der vorliegenden Erfindung, eine Ventilanordnung für ein hydraulisch betätigbares Kupplungssystem zu schaffen, welche besonders komfortabel, sicher und langzeitstabil arbeitet.

Die Lösung der Aufgabe erfolgt erfindungsgemäß durch eine Ventilanordnung für ein hydraulisch betätigbares Kupplungssystem mit den Merkmalen des Anspruchs 1. Bevorzugte Ausgestaltungen der Erfindung sind in den Unteransprüchen angegeben.

Eine Ventilanordnung für ein hydraulisch betätigbares Kupplungssystem weist einen Kanal zum druckdichten Führen einer Hydraulikflüssigkeit auf, wobei in dem Kanal ein Ventilkörper angeordnet ist, wobei benachbart zu einem nehmerseitigen Ende des Ventilkörpers ein nehmerseitiger Dichtsitz vorgesehen ist, wobei benachbart zu einem geberseitigen Ende des Ventilkörpers ein geberseitiger Dichtsitz vorgesehen ist, und wobei der Ventilkörper zwischen einer an dem nehmerseitigen Dichtsitz anliegenden Position und einer an dem geberseitigen Dichtsitz anliegenden Position frei beweglich angeordnet ist, wobei der Ventilkörper eine erste Führung zum Führen von Hydraulikflüssigkeit aufweist, welche erste Führung in einer an dem geberseitigen Dichtsitz anliegenden Position des Ventilkörpers verschlossen und in einer an dem nehmerseitigen Dichtsitz anliegenden Position des Ventilkörpers geöffnet ist, und wobei der Ventilkörper eine zweite Führung zum Führen von Hydraulikflüssigkeit aufweist, welche zweite Führung durch eine Dichtelement verschließbar ist, wobei das Dichtelement die zweite Führung bei einem geberseitigen Überdruck selbsttätig schließt und bei einem nehmerseitigen Überdruck selbsttätig öffnet.

Eine vorbeschriebene Ventilanordnung dient insbesondere dazu, ein hydraulisch betätigbares Kupplungssystem zu schaffen, welches besonders komfortabel, sicher und langzeitstabil arbeitet. Somit ist die Ventilanordnung insbesondere in ein hydraulisch betätigbares Einrücksystem oder Ausrücksystem einer Kupplung integrierbar.

Eine Ventilanordnung im Sinne der vorliegenden Erfindung ist insbesondere eine Anordnung, welche dazu geeignet ist, einen Fluidstrom, wie insbesondere den Strom einer Hydraulikflüssigkeit in einem Ausrück- oder Einrücksystem einer Kupplung beziehungsweise in einem Kupplungssystem, zu erhöhen, zu ermöglichen, zu drosseln oder zu verhindern. Die Ventilanordnung umfasst einen Kanal zum druckdichten Führen einer Hydraulikflüssigkeit. Dabei wird zweckmäßigerweise eine druckdichte Hydraulikleitung ausgebildet, welche Innendrücken standhalten kann wie sie in typischer Weise in einem Hydrauliksystem für Kupplungssysteme, wie beispielsweise aufweisend Doppelkupplungen, auftreten können. Derartige Drücke sind dem Fachmann dabei gut bekannt und können rein beispielhaft und in keiner Weise beschränkend in einem Bereich von 30-40bar liegen, wobei auch deutlich geringere oder auch höhere Drücke ausreichend sein können, wie beispielsweise in einem Bereich von 5bar.

Der Kanal kann beispielsweise dazu dienen, Teil einer Verbindung zwischen einer ersten Hydraulikkomponente und einer zweiten Hydraulikkomponente zu sein. Die erste Hydraulickomponente und die zweite Hydraulikkomponente sind dabei zweckmäßigerweise von einander verscheiden. Beispielsweise kann die erste Hydraulikkomponente eine Quelle für Hydraulikflüssigkeit sein und beispielsweise einen Geberzylinder umfassen. In diesem Fall kann der als Hydraulikleitung fungierende Kanal von dieser Seite mit Hydraulikdruck beaufschlagt werden. Dieser Teil ist somit der geberseitige Teil. Weiterhin kann die zweite Hydraulikkomponente mit der eigentlichen Kupplung verbunden sein, weshalb der Kanal mit einem entsprechenden nehmerseitigen Anschluss verbunden sein kann. Beispielsweise kann der nehmerseitige Anschluss mit einer Hydraulikkomponente verbunden sein, um einen Einrückhebel zum Öffnen oder Schließen der Kupplung anzusteuern. Dies kann zum Beispiel ein Kupplungsnehmerzylinder ("clutch master cylinder", CMC oder "clutch slave cylinder", CSC) sein. Dabei kann als Hydraulikflüssigkeit beispielsweise und nicht beschränkend Bremsflüssigkeit oder Mineralöl verwendet werden.

In dem Kanal ist ferner ein Ventilkörper angeordnet. Der Ventilkörper kann dazu dienen, insbesondere in Abhängigkeit der Position des Ventilkörpers den Kanal selektiv zu verschließen oder zu Öffnen. Dadurch kann insbesondere in Abhängigkeit der Position des Ventilkörpers ein Strömen von Hydraulikflüssigkeit von dem geberseitigen Bereich zu dem nehmerseitigen Bereich und/oder umgekehrt selektiv ermöglicht oder verbessert beziehungsweise verhindert oder zumindest signifikant verringert werden. Somit kann im Sinne der vorliegenden Erfindung ein Öffnen des Kanals das grundsätzliche Ermöglichen oder ein Verbessern der Strömung bedeuten, wobei ein Schließen des Kanals entsprechend ein Reduzieren beziehungsweise ein vollständiges Verhindern der Strömung meinen kann.

Um ein Öffnen beziehungsweise Schließen des Kanals zu ermöglichen, ist, etwa in dem Kanal, benachbart zu einem nehmerseitigen Ende des Ventilkörpers ein nehmerseitiger Dichtsitz vorgesehen und ist, etwa in dem Kanal, benachbart zu einem geberseitigen Ende des Ventilkörpers ein geberseitiger Dichtsitz angeordnet. In Abhängigkeit der herrschenden Druckverhältnisse ist der Ventilkörper dabei zwischen einer an dem nehmerseitigen Dichtsitz anliegenden Position und einer an dem geberseitigen Dichtsitz anliegenden Position beweglich angeordnet. Durch eine derartige Bewegung lässt sich eine definierte und selektive Dichtfunktion des Ventilelements und dadurch ein Öffnen oder Schließen des Kanals ermöglichen.

Um ein selektives Strömen der Hydraulikflüssigkeit zu ermöglichen, umfasst der Ventilkörper ferner eine erste Führung zum Führen von Hydraulikflüssigkeit. Die erste Führung ist dabei schließbar dadurch, dass sich der Ventilkörper in einer an dem geberseitigen Dichtsitz anliegenden Position befindet. Ein Verschließen kann dabei wie bereits erwähnt insbesondere bedeuten, dass ein Durchfluss von Hydraulikflüssigkeit durch die erste Führung zumindest bei einseitigem, insbesondere nehmerseitigem, Überdruck signifikant reduziert oder sogar vollständig verhindert wird. Andererseits ist die Führung in einer an dem nehmerseitigen Dichtsitz anliegenden Position des Ventilkörpers geöffnet, so dass zumindest bei einseitigem, insbesondere geberseitigem, Überdruck ein Strömen der Hydraulikflüssigkeit ermöglicht oder verbessert wird. Somit dient diese erste Führung insbesondere dazu, etwa bei einem Auskuppeln, das Strömen von Hydraulikflüssigkeit von einem Geberzylinder zu einem Nehmerzylinder, etwa eines CSC-Systems, zu ermöglichen.

Weiterhin umfasst der Ventilkörper zusätzlich zu der ersten Führung eine zweite Führung zum Führen von Hydraulikflüssigkeit. Dabei ist die zweite Führung durch ein Dichtelement, wie beispielsweise eine Dichtlippe, verschließbar. Dieses Dichtelement ist dabei insbesondere dazu ausgestaltet, die zweite Führung bei einem geberseitigen Überdruck selbsttätig zu schließen und bei einem nehmerseitigen Überdruck selbsttätig zu öffnen. In anderen Worten kann das Dichtelement ein Rückschlagventil sein. Entsprechend zu dem vorbeschriebenen Öffnen und Schließen der ersten Führung kann ein Schließen der zweiten Führung im Sinne der vorliegenden Erfindung meinen, dass ein Durchströmen von Hydraulikflüssigkeit zumindest bei einseitigem, insbesondere geberseitigem, Überdruck signifikant reduziert oder vollständig verhindert werden kann, und kann ein öffnen der zweiten Führung im Sinne der vorliegenden Erfindung meinen, dass ein Durchströmen von Hydraulikflüssigkeit zumindest bei einseitigem, insbesondere nehmerseitigem, Überdruck signifikant verbessert beziehungsweise grundsätzlich ermöglicht werden kann.

Somit ist der erste Kanal öffenbar beziehungsweise schließbar insbesondere in Abhängigkeit der Position des Ventilkörpers und ist der zweite Kanal öffenbar beziehungsweise schließbar insbesondere in Abhängigkeit der nehmerseitigen beziehungsweise geberseitigen Druckverhältnisse.

Durch die Kombination der vorstehenden Merkmale und insbesondere durch das Vorsehen zweier Führungen zum Führen von Hydraulikflüssigkeit wie vorstehend erläutert lässt sich ein besonders sicheres und langzeitstabiles Arbeiten der Ventilanordnung und dadurch eines mit einer derartigen Ventilanordnung ausgestatteten Kupplungssystems ermöglichen.

Eine wie vorstehend beschrieben ausgestaltete Ventilanordnung kann etwa bei einer Verwendung in einem Ausrück- oder Einrücksystem eines Kupplungssystems bewirken, dass ein Unterdruck bei einem Nehmerzylinder verhindert oder zumindest signifikant reduziert werden kann. Dies kann insbesondere deshalb von Vorteil sein, da ein Unterdruck an einem Nehmerzylinder, insbesondere auftretend in Kombination mit einem oftmals auftretenden Spiel an dem Nehmerzylinder, wie etwa einem CSC, zusammen mit einer Übersetzung zu einem verzögerten Kraftaufbau, ersichtlich durch eine Verschiebung der Pedalkraftkennlinie, führen kann. Dieser Effekt tritt insbesondere bei sehr schnellen Einkuppelbewegungen auf und kann wie folgt begründet werden.

Bei einer Hydrostatik sind die zu verschiebenden Volumen definiert. Veränderungen im Ausrücksystem, beispielsweise, oder in der Umgebung können dazu führen, dass beim Einkuppeln zu viel oder zu wenig Volumen vorhanden ist. Ausgeglichen werden kann dieses zwar in der Ruheposition des Kupplungspedals, da hier die Hochdruckseite meist mit der Niederdruckseite, wie etwa einem Reservoir verbunden ist. Dieser Ausgleichsvorgang kann auch als Schnüffeln bezeichnet werden, bei welchem die Kupplungshydraulik rekalibriert werden kann. Problematisch ist jedoch die Bewegung des Kupplungspedals. Fehlt bei der Rückstellbewegung Flüssigkeit oder ist die Druckhysterese groß, kann kurzzeitig, etwa in einem Bereich von kleiner als 50ms, ein Unterdruck am Nehmerzylinder auftreten, was zu dem vorbeschriebenen verzögerten Kraftaufbau führen kann.

Das Verhindern des Auftretens eines verzögerten Kraftaufbaus durch das Verwenden einer wie vorstehend beschrieben ausgestalteten Ventilanordnung kann dabei zu einer besonders betätigungsfreundlichen Pedalweg- und Pedalkraftcharakteristik und zu besonders schnell ansprechendenden und definiert ausführbaren Schaltvorgängen führen.

Dabei ist die vorstehend beschriebene Lösung ferner besonders langzeitstabil, da eine undefinierte Fehlfunktion durch Schmutzpartikel, wie sie durch das Verwenden beispielsweise eines Nachsaugventils unter Umständen auftreten kann, verhindert werden kann. Insbesondere können undefinierte interne Leckagen durch ein gegebenenfalls nicht vollständiges Schließen des Ventils beziehungsweise einzelner Hydraulikflüssigkeit-Führungen verhindert werden, welche zu einer nicht beeinflussbaren Einwirkung auf das Arbeiten der Ventilanordnung führen könnten. Somit können durch ein Verwenden der vorbeschriebenen Ventilanordnung die Betriebskosten besonders niedrig gehalten und im Vergleich zu Lösungen aus dem Stand der Technik reduziert werden.

Weiterhin ist eine derartige Ventilanordnung besonders einfach und kostengünstig herstellbar, da die Sicherheit der Montage und der Montageaufwand gering gehalten werden kann. Somit ist die Ventilanordnung auch für eine Massenproduktion geeignet, was die Kosten der Ventilanordnung wie auch ein mit dieser ausgestatteten Kupplungssystems reduzieren kann.

Zusammenfassend stellt die Ventilanordnung eine kostengünstige Lösung bereit, um ein Kupplungssystem zu schaffen, welches besonders komfortabel, sicher und langzeitstabil arbeitet.

Der Ventilkörper ist zwischen einer an dem nehmerseitigen Dichtsitz anliegenden Position und einer an dem geberseitigen Dichtsitz anliegenden Position frei beweglich. In anderen Worten ist der Ventilkörper ein lediglich durch die Strömung der Hydraulikflüssigkeit beziehungsweise durch die nehmerseitigen und geberseitigen Druckverhältnisse schaltbares Ventil. Es kann somit auf weitere Bauelemente, wie etwa Federn oder Schließkörper, verzichtet werden. Dabei kann ein besonders geräuscharmes und somit komfortables Schalten ermöglicht werden, da bei herkömmlichen Ventilanordnungen auftretende Geräuschentwicklungen, welche etwa auftreten können durch Schwingungen oder Anschlagbewegungen herkömmlicher FederMasse-Systeme, nicht auftreten. Darüber hinaus kann durch einen Verzicht auf derartige Bauteile ein besonders kostengünstiges Herstellungsverfahren und eine problemlose Wartung ermöglicht werden. Ferner kann in dieser Ausgestaltung die Langlebigkeit weiter gesteigert werden, da bei einem Verzicht auf weitere Bauteile eine Beschädigung dieser nicht vorkommen kann.

In einer Ausgestaltung kann das Dichtelement aus einem elastischen Material ausgestaltet sein. In dieser Ausgestaltung kann ein besonders geräuscharmes Schließen des Dichtelements beziehungsweise des zweiten Kanals durch das Dichtelement ermöglicht werden, da insbesondere bei dem Auftreffen eines elastischen Materials auf ein weiteres Material meist keine signifikant wahrnehmbaren Geräusche entstehen. Darüber hinaus kann durch die Verwendung eines elastischen Materials ein Öffnen beziehungsweise Schließen des Dichtelements ohne das Vorsehen weiterer Rückstellmittel, wie etwa Federn, ermöglicht werden, was den Komfort und ferner die Kosten der Ventilanordnung weiter verbessern kann. Weiterhin kann unter Verwenden eines elastischen Materials der Schließ- beziehungsweise Öffnungsdruck durch Auswahl des elastischen Materials anhand seiner Elastizität, beispielsweise, definiert einstellbar sein, so dass ein besonders definiertes Kupplungsverhalten ermöglicht werden kann. Schließlich kann durch ein elastisches Material ein besonders sicheres Dichten ermöglicht werden. Beispiele für elastische Materialien umfassen insbesondere elastomere Polymere, wie beispielsweise Kautschuk-Materialien.

In einer weiteren Ausgestaltung kann das Dichtelement schlauchförmig ausgestaltet sein. Insbesondere in dieser Ausgestaltung kann ein Herstellungsprozess des Ventilkörpers und damit der Ventilanordnung besonders einfach und kostengünstig möglich sein, da ein Schlauch durch einfaches Aufschieben befestigbar sein kann. Dabei kann der Schlauch beispielsweise, um einen besonders festen Sitz zu erhalten, auf seinen Sitz aufgeschrumpft werden. Ferner kann der Schlauch etwa eine asymmetrische Struktur aufweisen, um etwa ein besonders vorteilhaftes Befestigen mit einer besonders sicheren Abdichtfunktion zu ermöglichen.

In einer weiteren Ausgestaltung kann das Dichtelement derart ausgestaltet sein, um bei einer an dem geberseitigen Dichtsitz anliegenden Position des Ventilkörpers an dem geberseitigen Dichtsitz anzuliegen. In dieser Ausgestaltung kann das Dichtelement somit zwei Dichtfunktionen gleichzeitig wahrnehmen, was ein besonders kostengünstiges Herstellen und eine besonders kostengünstige Wartung ermöglichen kann. Darüber hinaus kann in dieser Ausgestaltung insbesondere dann, wenn das Dichtelement aus einem elastischen Material geformt ist, ein besonders geräuscharmes und sicheres Abdichten ermöglicht werden.

In einer weiteren Ausgestaltung kann der Ventilkörper einen definierten Durchlass aufweisen. Unter einem Durchlass kann dabei im Sinne der vorliegenden Erfindung insbesondere eine durch die nehmerseitigen und geberseitigen Druckverhältnisse beziehungsweise durch die Positionierung und damit durch ein normales Arbeiten des Ventilkörpers nicht verschließbare Öffnung verstanden werden. In anderen Worten wird in dieser Ausgestaltung ein Mittel vorgesehen, durch welches in jeder Position des Ventilkörpers Hydraulikflüssigkeit von der Geberseite zur Nehmerseite und umgekehrt strömen kann. In dieser Ausgestaltung kann besonders sichergestellt werden, dass sich der Vordruck bei unbetätigter Kupplung vollständig abbauen kann und die Kupplung somit das volle Übertragungsmoment liefern kann. Ein weiterer Vorteil eines derartigen Durchlasses kann beispielsweise darin gesehen werden, dass dieser verwendbar ist bei einer Evakuierung der Nehmerseite im Rahmen einer Vakuum-DruckBefüllung. Beispielsweise kann der Durchlass durch eine Nut gebildet werden, welche beispielsweise benachbart zu dem den zweiten Kanal verschließenden Dichtelement angeordnet ist. Insbesondere kann der Durchlass, wie etwa die Nut, etwa in der Auflage des Dichtelements vorgesehen sein und/oder rein beispielhaft halbkreisförmig ausgestaltet sein. Geeignete Durchmesser liegen beispielhaft in einem Bereich von etwa ≤1,0 mm, insbesondere ≤ 0,5mm, beispielsweise ≥ 0,1mm bis ≤ 0,4 mm, besonders bevorzugt 0,3mm.

In einer weiteren Ausgestaltung kann der Kanal durch ein Gehäuse begrenzt sein, welches Gehäuse Bestandteil eins Geberzylinders ist. Insbesondere kann die Ventilanordnung somit in dem Druckangang des Geberzylinders angeordnet sein. Diese Ausgestaltung ermöglicht eine einfache Herstellbarkeit und kann ferner besonders wirksam sein.

Hinsichtlich weiterer technischer Merkmale und Vorteile der Ventilanordnung wird hiermit explizit auf die nachfolgende Beschreibung des Kupplungssystems, die Figuren sowie die Beschreibung der Figuren verwiesen.

Die vorliegende Erfindung betrifft ferner ein Kupplungssystem, aufweisend eine Ventilanordnung, die wie vorstehend beschrieben ausgebildet ist. Dabei kann das Kupplungssystem insbesondere eine solches sein, welches etwa eine Doppelkupplung und/oder ein CSC aufweist. Exemplarische und nicht beschränkende Beispiele umfassen dabei insbesondere Kupplungssysteme mit hydraulisch betätigbaren Einrücksystemen oder Ausrücksystemen zum Einsatz in Kraftfahrzeugen. Zusammenfassend schafft ein derartiges hydraulisch betätigbares Kupplungssystem eine kostengünstige, sichere und stabile Lösung, um ein besonders sicheres und dauerhaftes Verhindern eines Unterdrucks in einem Nehmerzylinder zu ermöglichen.

Hinsichtlich weiterer technischer Merkmale und Vorteile des Kupplungssystems wird hiermit explizit auf die vorstehende Beschreibung der Ventilanordnung, die Figuren sowie die Beschreibung der Figuren verwiesen.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Darstellung einer Ausgestaltung einer Ventilanordnung gemäß der vorliegenden Erfindung;
Fig. 2: eine Ansicht einer Pedalkraft-Pedalweg-Kennlinie und einer Pedalweg-Ausrückweg-Kennlinie gemäß dem Stand der Technik; und
Fig. 3: eine Ansicht einer Pedalkraft-Pedalweg-Kennlinie und einer Pedalweg-Ausrückweg-Kennlinie mit einer Ventilanordnung gemäß der vorliegenden Erfindung.

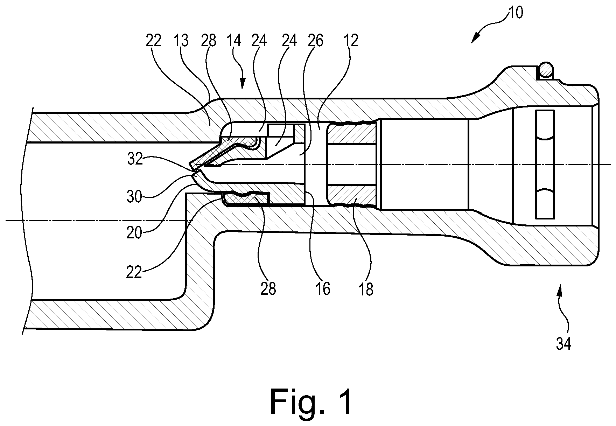

In der Figur 1 ist eine Ventilanordnung 10 gezeigt. Die Ventilanordnung 10 kann insbesondere in einem hydraulisch betätigbaren Kupplungssystem, wie insbesondere einem Einrücksystem oder Ausrücksystem, verwendet werden. Dabei kann die Ventilanordnung 10 in einem frei wählbaren Bereich in dem Kupplungssystem angeordnet sein, beispielsweise in dem Hochdruckbereich eines Einrück- oder Ausrücksystems, einer Leitung, Drehmomentbegrenzer (PTL), Adapter, Dämpfer, Kupplungsnehmer, wie etwa CSC oder anderen Bauteilen.

Die Ventilanordnung 10 umfasst einen Kanal 12 zum druckdichten Führen einer Hydraulikflüssigkeit. In dem Kanal 12 ist ein Ventilkörper 14 angeordnet. Gemäß Figur 1 ist der Kanal 12 durch ein Gehäuse 13 begrenzt, welches Gehäuse 13 Bestandteil eins Geberzylinders ist. Der Umfang des Ventilkörpers 14 ist dabei zweckmäßigerweise zumindest teilweise in Form und Größe an den Innenumfang des Gehäuses 13 beziehungsweise an die Geometrie des Kanals 14 angepasst, so dass hier ein dichtender Effekt eintreten kann. Denn der Ventilkörper 14 dient insbesondere dazu, den als Hydraulikleitung fungierenden Kanal 14 zu verschließen oder zu öffnen, um so ein Schließen beziehungsweise ein Öffnen der Kupplung zu ermöglichen.

Hierzu ist, insbesondere in dem Kanal 12, benachbart zu einem nehmerseitigen Ende 16 des Ventilkörpers 14 ein nehmerseitiger Dichtsitz 18 vorgesehen, und ist, insbesondere in dem Kanal 12, benachbart zu einem geberseitigen 20 Ende des Ventilkörpers 14 ein geberseitiger Dichtsitz 22 angeordnet. Ein geberseitiges beziehungsweise nehmerseitiges Ende ist dabei ein Ende, welches in Richtung der Seite des Kanals 12 zeigt, welche zu einer geberseitigen beziehungsweise nehmerseitigen Komponente, wie etwa einem Geberzylinder beziehungsweise Nehmerzylinder führt. Entsprechend bedeutet benachbart zu einem geberseitigen Ende 20 beziehungsweise zu einem nehmerseitigen 16 Ende eine Positionierung derart, dass das geberseitige Ende 20 mit der benachbart angeordneten Komponente in Kontakt bringbar ist beziehungsweise dass das nehmerseitige Ende 16 mit der benachbart angeordneten Komponente in Kontakt bringbar ist. Ferner ist der Ventilkörper 14 zwischen einer an dem nehmerseitigen Dichtsitz 18 anliegenden Position und einer an dem geberseitigen Dichtsitz 22 anliegenden Position insbesondere frei beweglich angeordnet. Weiterhin umfasst der Ventilkörper 14 eine erste Führung 24 zum Führen von Hydraulikflüssigkeit, welche erste Führung 24 in einer an dem geberseitigen 22 Dichtsitz anliegenden Position des Ventilkörpers 14 verschlossen und in einer an dem nehmerseitigen Dichtsitz 18 anliegenden Position des Ventilkörpers 14 geöffnet ist. Ferner weist der Ventilkörper 14 eine zweite Führung 26 zum Führen von Hydraulikflüssigkeit auf, welche zweite Führung 26 durch ein Dichtelement 28 verschließbar ist, wobei das Dichtelement 28 die zweite Führung 26 bei einem geberseitigen Überdruck selbsttätig schließt und bei einem nehmerseitigen Überdruck selbsttätig öffnet. Dazu kann eine Dichtanlage 30 vorgesehen sein an welcher das Dichtelement 28 in einem dichtenden Zustand anliegt. Beispielsweise in der Dichtanlage 30 kann ein Durchlass 32, wie etwa eine Nut, vorgesehen sein.

In der Ausgestaltung gemäß Figur 1 ist das Dichtelement 28 aus einem elastischen Material und dabei insbesondere schlauchförmig ausgestaltet. Dabei ist zu erkennen, dass das schlauchartige Dichtelement 28 asymmetrisch ausgestaltet ist und dabei in einem ersten Bereich kürzer ausgestaltet ist, als in einem zweiten Bereich. Beispielsweise in dieser Ausgestaltung kann es ermöglicht werden, dass der erste Bereich an der Dichtanlage 30 anliegt und ferner das Dichtelement 28 derart ausgestaltet ist, um bei einer an dem geberseitigen Dichtsitz 22 anliegenden Position des Ventilkörpers 14 insbesondere mit dem zweiten Bereich an dem geberseitigen Dichtsitz 22 anliegt.

Gemäß Figur 1 ist der Ventilkörper 14 in einer an dem geberseitigen Dichtsitz 22 angeordneten Position, wobei die Kupplung insbesondere eingekuppelt ist und die Nehmer gegen einen temporären Überdruck geschützt sind. Bei einem Auskuppeln strömt ein Medium, wie insbesondere Hydraulikflüssigkeit, von dem Geberzylinder zu dem Nehmerzylinder. Dabei wird der Ventilkörper 14 von der Strömung mitgenommen und gegen den beispielsweise als Einpresskonus ausgestalteten nehmerseitigen Dichtsitz 18 gelegt. Die Hydraulikflüssigkeit kann dabei ungehindert durch die erste Führung 24 strömen. Bei einem erneuten Einkuppeln Strömt die Hydraulikflüssigkeit unter Druck von dem Nehmerzylinder zu dem Geberzylinder, so dass der Ventilkörper 14 wiederum von der Strömung mitgenommen und gegen den geberseitigen Dichtsitz 22 anliegt, welcher gemäß Figur 1 Teil des Gehäuses 13 ist. Der Druck erhöht sich dann weiter, bis das Dichtelement 28 von seiner Dichtanlage 30 abhebt. Nunmehr strömt die Hydraulikflüssigkeit zu dem Geberzylinder. Bricht der Druck von dem Nehmerzylinder weg und versucht der Geberzylinder aber weiter, Flüssigkeit aus dem System zu ziehen, beispielsweise weil die Schnüffelposition noch nicht erreicht ist, so entsteht geberseitig ein Unterdruck, der den Ventilkörper 14 in geschlossener Stellung hält und von der Nehmerseite abkoppelt. Erreicht der Geber die Schnüffelstellung dann bricht dieser Unterdruck zusammen, weil Flüssigkeit aus dem Sekundärraum nachströmen kann.

Bezüglich des vorgenannten Schließens des Ventilkörpers 14 ist hier zunächst die erste Führung 24 geschlossen, wobei ferner die zweite Führung 26 bis zu einem Öffnungsdruck des Dichtelements 28 geöffnet und danach geschlossen ist. Ein derartiges Verschließen in Abhängigkeit des Öffnungsdrucks des Dichtelements 28 reicht bereits aus, um die vorgenannten Vorteile zu erreichen und etwa einen verzögerten Kraftaufbau zu verhindern. Geeignete Öffnungsdrücke, welche einem Druckunterschied von einem relativ höheren Druck der Nehmerseite zu einem relative niedrigeren Druck der Geberseite entsprechen, liegen etwa in einem Bereich von ≥ 0,2 bar bis s 1,0 bar, insbesondere ≥ 0,25 bar bis ≤ 0,75 bar, beispielsweise bei 0,5 bar. Derartige Drücke helfen, um unnötige Druckhysteresen zu vermeiden. Derartige lassen sich insbesondere durch eine Auswahl der spezifischen Eigenschaften des Materials des Dichtelements 28 einstellen.

Weiterhin ist in der Figur 1 ein nehmerseitiger Anschluss 34 gezeigt, mit welchem das Gehäuse 13 an eine nehmerseitige Hydraulikkomponente anschließbar ist.

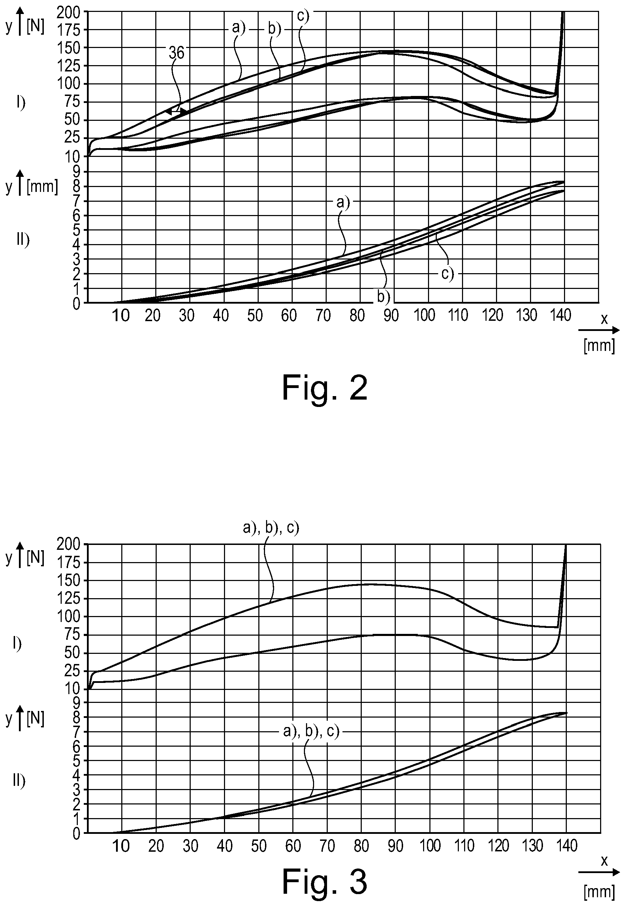

In den Figuren 2 und 3 ist der Effekt einer vorbeschriebenen Ventilanordnung 10 gezeigt. Dabei zeigen die Figuren 2.I und 3.I jeweils eine Ansicht einer Pedalkraft-Pedalweg-Kennlinie und die Figuren 2.II und 3.II jeweils eine Pedalweg-Ausrückweg-Kennlinie. Dabei ist der Pedalweg auf der x-Achse aufgetragen und die Pedalkraft (Figuren 2.I und 3.I) beziehungsweise der Ausrückweg eines Ausrückers des Kupplungssystems (Figuren 2.II und 3.II) jeweils auf der Y-Achse aufgetragen. Dabei ist in den Figuren jeweils eine Referenz-Kennlinie a) gezeigt welche einen Kupplungsvorgang ohne verzögerten Kraftaufbau zeigt, und entsprechende gemessene Kennlinien mit einer Ventilanordnung 14 gemäß der Erfindung (Figur 3) und mit einer Lösung aus dem Stand der Technik (Figur 2). In der Figur 2 ist eine Verschiebung der Kennlinie bei den Messwerten b) und c) im Vergleich zu der Referenzlinie a) von mehr als 5mm gezeigt, wie dies durch den Pfeil 36 dargestellt ist, was einen verspäteten Kraftaufbau darstellt. Im Gegensatz dazu ist ein derartiger verzögerter Kraftaufbau in der Figur 3 nicht zu erkennen.

### Bezugszeichenliste

- 10: Ventilanordnung
- 12: Kanal
- 13: Gehäuse
- 14: Ventilkörper
- 16: nehmerseitiges Ende
- 18: nehmerseitiger Dichtsitz
- 20: geberseitiges Ende
- 22: geberseitiger Dichtsitz
- 24: erste Führung
- 26: zweite Führung
- 28: Dichtelement
- 30: Dichtanlage
- 32: Durchlass
- 34: nehmerseitiger Anschluss
- 36: Pfeil

## Patentansprüche

1. Ventilanordnung für ein hydraulisch betätigbares Kupplungssystem, aufweisend einen Kanal (12) zum druckdichten Führen einer Hydraulikflüssigkeit, wobei in dem Kanal (12) ein Ventilkörper (14) angeordnet ist, wobei benachbart zu einem nehmerseitigen Ende (16) des Ventilkörpers (14) ein nehmerseitiger Dichtsitz (18) vorgesehen ist, wobei benachbart zu einem geberseitigen Ende (20) des Ventilkörpers (14) ein geberseitiger Dichtsitz (22) vorgesehen ist, und wobei der Ventilkörper (14) zwischen einer an dem nehmerseitigen Dichtsitz (18) anliegenden Position und einer an dem geberseitigen Dichtsitz (22) anliegenden Position frei beweglich angeordnet ist, wobei der Ventilkörper (14) eine erste Führung (24) zum Führen von Hydraulikflüssigkeit aufweist, welche erste Führung (24) in einer an dem geberseitigen Dichtsitz (22) anliegenden Position des Ventilkörpers (14) verschlossen und in einer an dem nehmerseitigen Dichtsitz (18) anliegenden Position des Ventilkörpers (14) geöffnet ist, und wobei der Ventilkörper (14) eine zweite Führung (26) zum Führen von Hydraulikflüssigkeit aufweist, welche zweite Führung (26) durch ein Dichtelement (28) verschließbar ist, wobei das Dichtelement (28) die zweite Führung (26) bei einem geberseitigen Überdruck selbsttätig schließt und bei einem nehmerseitigen Überdruck selbsttätig öffnet.

2. Ventilanordnung nach Anspruch 1, **dadurch gekennzeichnet, dass** das Dichtelement (28) aus einem elastischen Material ausgestaltet ist.

3. Ventilanordnung nach einem der Ansprüche 1 bis 2, **dadurch gekennzeichnet, dass** das Dichtelement (28) schlauchförmig ausgestaltet ist.

4. Ventilanordnung nach einem der Ansprüche 1 bis 3, **dadurch gekennzeichnet, dass** das Dichtelement (28) derart ausgestaltet ist, um bei einer an dem geberseitigen Dichtsitz (22) anliegenden Position des Ventilkörpers (14) an dem geberseitigen Dichtsitz (22) anzuliegen.

5. Ventilanordnung nach einem der Ansprüche 1 bis 4, **dadurch gekennzeichnet, dass** der Kanal (12) durch ein Gehäuse (13) begrenzt ist, welches Gehäuse (13) Bestandteil eins Geberzylinders ist.

6. Ventilanordnung nach einem der Ansprüche 1 bis 5, **dadurch gekennzeichnet, dass** der Ventilkörper (14) einen definierten Durchlass aufweist.

7. Kupplungssystem, aufweisend eine Ventilanordnung (10) nach einem der Ansprüche 1 bis 6.

## Claims

1. Valve arrangement for a hydraulically actuable clutch system, having a duct (12) for the pressure-tight guidance of a hydraulic liquid, a valve body (14) being arranged in the duct (12), a slave-side sealing seat (18) being provided adjacently with respect to a slave-side end (16) of the valve body (14), a master-side sealing seat (22) being provided adjacently with respect to a master-side end (20) of the valve body (14), and the valve body (14) being arranged such that it can be moved freely between a position, in which it bears against the slave-side sealing seat (18), and a position, in which it bears against the master-side sealing seat (22), the valve body (14) having a first guide (24) for the guidance of hydraulic liquid, which first guide (24) is closed in a position of the valve body (14), in which it bears against the master-side sealing seat (22), and is open in a position of the valve body (14), in which it bears against the slave-side sealing seat (18), and the valve body (14) having a second guide (26) for the guidance of hydraulic liquid, which second guide (26) can be closed by way of a sealing element (28), the sealing element (28) closing the second guide (26) automatically in the case of a master-side positive pressure and opening it automatically in the case of a slave-side positive pressure.

2. Valve arrangement according to Claim 1, **characterized in that** the sealing element (28) is configured from an elastic material.

3. Valve arrangement according to either of Claims 1 and 2, **characterized in that** the sealing element (28) is of hose-shaped configuration.

4. Valve arrangement according to one of Claims 1 to 3, **characterized in that** the sealing element (28) is configured so as to bear against the master-side sealing seat (22) in the case of a position of the valve body (14), in which it bears against the master-side sealing seat (22).

5. Valve arrangement according to one of Claims 1 to 4, **characterized in that** the duct (12) is delimited by way of a housing (13), which housing (13) is a constituent part of a master cylinder.

6. Valve arrangement according to one of Claims 1 to 5, **characterized in that** the valve body (14) has a defined outlet.

7. Clutch system, having a valve arrangement (10) according to one of Claims 1 to 6.

## Revendications

1. Arrangement de soupapes pour un système d'accouplement actionnable hydrauliquement, comprenant un canal (12) pour une conduite étanche à la pression d'un fluide hydraulique, dans lequel un corps de soupape (14) est agencé dans le canal (12), dans lequel un siège d'étanchéité (18) côté récepteur est prévu adjacent à une extrémité (16) côté récepteur du corps de soupape (14), dans lequel un siège d'étanchéité (22) côté émetteur est prévu adjacent à une extrémité (20) côté émetteur du corps de soupape (14), et dans lequel le corps de soupape (14) est agencé comme librement mobile entre une position située au siège d'étanchéité (18) côté récepteur et une position située au siège d'étanchéité (22) côté émetteur, dans lequel le corps de soupape (14) comporte une première conduite (24) pour conduire le fluide hydraulique, cette première conduite (24) étant fermée à une position du corps de soupape (14) située au siège d'étanchéité (22) côté émetteur et ouverte à une position du corps de soupape (14) située au siège d'étanchéité (18) côté récepteur, et dans lequel le corps de soupape (14) comporte une deuxième conduite (26) pour conduire le fluide hydraulique, cette deuxième conduite (26) étant fermable par un élément d'étanchéité (28), dans lequel l'élément d'étanchéité (28) ferme de lui-même la deuxième conduite (26) en cas de surpression côté émetteur et l'ouvre de lui-même en cas de surpression côté récepteur.

2. Arrangement de soupapes selon la revendication 1, **caractérisé en ce que** l'élément d'étanchéité (28) est conçu à partir d'un matériau élastique.

3. Arrangement de soupapes selon l'une des revendications 1 à 2, **caractérisé en ce que** l'élément d'étanchéité (28) est conçu comme tubulaire.

4. Arrangement de soupapes selon l'une des revendications 1 à 3, **caractérisé en ce que** l'élément d'étanchéité (28) est conçu de façon à se trouver sur le siège d'étanchéité (22) côté émetteur à une position du corps de soupape (14) située au siège d'étanchéité (22) côté émetteur.

5. Arrangement de soupapes selon l'une des revendications 1 à 4, **caractérisé en ce que** le canal (12) est délimité par un boîtier (13), lequel boîtier (13) est un composant d'un cylindre émetteur.

6. Arrangement de soupapes selon l'une des revendications 1 à 5, **caractérisé en ce que** le corps de soupape (14) comporte un passage défini.

7. Système de couplage comportant un arrangement de soupapes (10) selon l'une des revendications 1 à 6.
